# EUROPÄISCHE PATENTSCHRIFT

(11) **EP 1 320 535 B1**
(45) Veröffentlichungstag und Bekanntmachung des Hinweises auf die Patenterteilung: **11.08.2004**
(21) Anmeldenummer: 01985659.0
(22) Anmeldetag: 28.09.2001
(51) Int. Cl.: C07F 9/38

(54) **VERFAHREN ZUR ISOLIERUNG VON PHARMAZEUTISCH VERWERTBAREM ETIDRONAT-DINATRIUM**
METHOD FOR ISOLATING PHARMACEUTICALLY EXPLOITABLE ETIDRONATE DISODIUM
PROCEDE POUR L'ISOLATION D'ETIDRONATE DISODIQUE UTILISABLE EN PHARMACIE

(30) Priorität: 28.09.2000 DE 10049735
(43) Veröffentlichungstag der Anmeldung: 25.06.2003
(73) Patentinhaber: Schering Aktiengesellschaft, 13353 Berlin (DE)
(72) Erfinder: GRAWE, Detlef, 99510 Kleinromstedt (DE); SCHMIDT, Barbara, 07616 Bürgel OT Gniebsdorf (DE); RÄTHE, Harald, 97747 Jena (DE)
(74) Vertreter: Cramer, Eva-Maria
(86) Internationale Anmeldenummer: PCT/DE2001/003766
(87) Internationale Veröffentlichungsnummer: WO 2002/026751

(56) Entgegenhaltungen:
- US-A- 3 400 149
- US-A- 3 855 284
- BLASER, B. ET AL: "1 - Hydroxyalkane - 1, 1 - diphosphonic acids" Z. ANORG. ALLG. CHEM. (1971), 381(3), 247-59 , XP001057402

## Beschreibung

Die Erfindung betrifft ein Verfahren zur Isolierung von pharmazeutisch verwertbarem Etidronat-Dinatrium mittels Fällung in einer flüssig-flüssig Dispersion, bestehend aus einer wäßrig-organischen Phase und einer wäßrigen Phase des Etidronat-Dinatriumsalzes, sowie eine neue Festkörperform von Etidronat-Dinatrium, die mittels diesem Verfahren erhältlich ist.

Aus der Fach- und Patentliteratur ist bekannt, das Dinatriumsalz der Hydroxyethan-1,1-diphosphorsäure (HEDP) mittels Neutralisation mit Natronlauge in Gegenwart von Wasser herzustellen (DE-A-1 148 551).
Der Nachteil der bisher bekannten Isolierungsverfahren zur Gewinnung des Feststoffes besteht darin,
- daß die weitestgehende Abdampfung des Wassers zum wasserfreien Salz nur bei relativ hohen Temperaturen erfolgen kann,
- daß das dazu benutzte Verfahren der Sprühtrocknung nur ein hygroskopisches Produkt mit sehr geringer Schüttdichte, hohem Staubanteil und schlechter Rieselfähigkeit ergibt und damit nicht zur galenischen Verarbeitung geeignet ist,
- daß das alternativ anzuwendende Verfahren der Dünnschichttrocknung bei hohen Temperaturen zwar kompakte, aber krustenartige Strukturen hervorbringt, die einen zusätzlichen Mahlprozeß erforderlich machen,
- und daß im Endprodukt eine Akkumulation der schwerflüchtigen Verunreinigungen der HEDP, wie phosphorige Säure und Essigsäure, stattfindet und daher für pharmazeutische Zwecke eine zusätzliche Vorreinigung der HEDP bedingen (DD 275 462).

Es ist weiterhin bekannt, das Dinatriumsalz der HEDP mittels Kühlungskristallisation aus einer konzentrierten Lösung herzustellen.
Nachteilig an dieser Lösung ist,
- daß das voluminöse, nadelförmige Kristallisat schwer von der Mutterlauge abtrennbar ist,
- daß ein filzartiger Filterkuchen entsteht,
- daß das Feuchtprodukt beim Trocknen verklumpt und das Wasser sich sehr schwer aus dem Inneren der Agglomerate entfemen läßt,
- und daß hohe Mutterlaugenverluste infolge der guten Wasserlöslichkeit des Natriumsalzes zu verzeichnen sind.

Des weiteren beschreibt die Patentschrift DE-A-1 148 551 die Überführung der bei der Acylierung von phosphoriger Säure anfallenden Säuren und Salze in kristalliner Form in entsprechende Alkalisalze mittels Ausfällen durch die Zugabe von organischen Lösungsmitteln, wie Alkohol oder Aceton, zur wäßrigen Salzlösung. Die Nachteile dieser Lösung bestehen
- im Erhalt von mehr oder weniger feinkristallinen bzw. nadelförmigen Produkten, die ebenfalls nur schwer trockenbar sind, da sie beim Trocknungsvorgang ebenfalls zum Agglomerieren und Zusammenbacken neigen,
- im hohen Anteil festgebundener Lösungmittelreste im Endprodukt, beispielsweise als Solvate sowie
- in der Notwendigkeit eines zusätzlichen Mahlvorgangs des Produktes. Solche Mahlprozesse führen in der Regel zu sehr breitren Kornverteilungen mit hohen Staubanteilen, die eine pharmazeutische Verarbeitung erschweren. Außerdem werden durch hohe Oberflächenrauhigkeit und unregelmäßige Partikelform die Fließeigenschaften und damit die Rieselfähigkeit des Pulvers negativ beeinträchtigt.

Die Patent - und Fachliteratur US-A-3855284, US-A-3400149 und Z. Anorg. Allg. Chem. (1971), 381(3), 247-59 offenbart die Herstellung von Etidronat-Dinatriumsalzen. Eine Ausfällung zweier getrennter Kornfraktionen wird nicht aufgezeigt.

Aus der Fachliteratur ist zudem bekannt, daß die Zugabe der wäßrigen Salzlösung zum organischen Lösungsmittel in der Regel zu einer Ausfällung einer schmierigen und klebrigen wäßrigen, allmählich zu groben Klumpen erstarrenden Phase führt. Dies ist durch die Tatsache begründet, daß das Natriumsalz in allen organischen Lösungsmitteln nahezu unlöslich ist. Ein Verfahren zur Herstellung bzw. Isolierung von Etidronat-Dinatrium mit technischen Parametern, die eine pharmazeutische Verwertung gewährleisten, ist in der Fach- und Patentliteratur nicht offenbart.

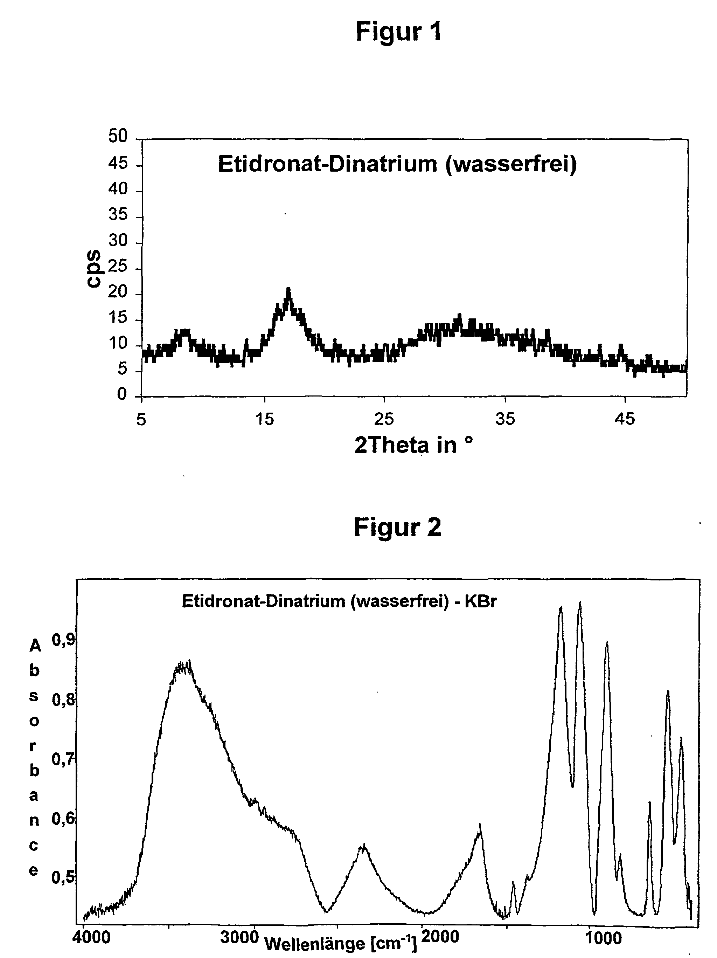

Etidronat-Dinatrium wird beispielsweise als Knochen-Calziumregulator oral als Tablette verabreicht. Durch den hohen Wirkstoffgehalt der Tablette etwa 80 %, bestimmen dessen Festkörpereigenschaften in hohem Maße die pharmazeutische Verarbeitung und die Eigenschaften der Tablette. An die Riesel- und Fließeigenschaften, sowie an ein reproduzierbares Schüttvolumen werden deshalb besondere Anforderungen gestellt. Die am Markt befindlichen Produkte weisen diesbezüglich sehr ungünstige Eigenschaften auf. Sie sind kristallin (siehe Figur 2) und weisen generell feinere und unregelmäßige Körnungen mit hohem Feinkornanteil im Pulver (siehe Figur 4) auf. Der hauptsächlichste Nachteil besteht darin, dass Schüttdichte und Rieselfähigkeit dieser Marktprodukte schwankt, was für Tabletten mit hohem Wirkstoffanteil besonders problematisch ist.
So wurden in Marktprodukten stark schwankende Schüttdichten in einem Bereich von 0,25 bis 0,35 g/cm³ und ein Feinpartikelanteil gleich Korngröße von 10 bis 30 Gew% < 5 µm und 20 bis 95 Gew% < 100 µm gefunden. Besonders der hohe und stark schwankende Feinpartikelanteil wirkt sich negativ auf die Tablettierungseigenschaften des Wirkstoffes aus. Außerdem werden durch die unregelmäßige Oberfläche der kristallinen Partikel die Fließeigenschaften zusätzlich negativ beeinträchtigt. Ausdruck dessen ist ein relativ hoher Schüttwinkel von > 45°.

Der Erfindung liegt die Aufgabe zugrunde, ein Verfahren zu entwickeln, das die Erzeugung von pharmazeutisch verwertbarem Etidronat-Dinatrium ermöglicht, das heißt mit hoher Ausbeute ein Produkt mit hoher Reinheit liefert, das eine Korngröße im Bereich von 0,2 - 1 mm, eine Schüttdichte von 0,4 - 0,6 g/cm³ und eine gute Rieselfähigkeit und damit eine hohe pharmazeutische Verwertbarkeit, aufweist.

Diese Aufgabe wird erfindungsgemäß durch ein Verfahren zur Isolierung von Etidronat-Dinatrium gelöst, wobei
a) eine flüssig-flüssig Dispersion, bestehend aus
   - einer wäßrig-organischen und
   - einer wäßrigen, das Etidronat-Dinatriumsalz enthaltenden Phase auf eine Temperatur von 0 °C bis 30 °C eingestellt und intensiv gerührt wird,
b) anschließend eine Grobkornfraktion aus der flüssig-flüssig Dispersion ausgefällt wird,
c) in einem zweiten, verzögerten Schritt eine Feinkornfraktion aus der organischen Phase ausgefällt wird.

Vorzugsweise wird die Feinkomfraktion in einem Schritt d) durch Klassierung von der Grobkomfraktion getrennt und in das Verfahren zurückgeführt.

In einem weiteren Schritt e) kann die Grobkomfraktion nach Schritt d) filtriert und mittels Trocknung in bewegter Schüttung bis zu einer Endtemperatur von 85 °C bis 100 °C getrocknet werden.

Bevorzugt weist die flüssig-flüssig Dispersion einen Gesamtwassergehalt von 25 bis 35 Vol.-% bzw. einen Gesamt-Etidronat-Dinatriumsalzgehalt von 10 bis 100 g/kg Dispersion auf.

Die flüssig-flüssig Dispersion wird vorzugsweise zwischen 5 °C und 10 °C eingestellt.

Die wäßrig-organische Phase ist vorzugsweise eine Isopropanol/Wasser-Phase.

Des weiteren ist es erfindungsgemäß bevorzugt, daß für die flüssig-flüssig Dispersion eine wäßrige Lösung von Etidronat-Dinatrium einem Lösungsmittel aus Isopropanol/Wasser zugegeben wird.

Es wurde mit dem erfindungsgemäßen Etidronat-Dinatrium gemäß des erfindungsgemäßen Verfahrens ein Wirkstoff ermittelt, der als kristallwasserfreie Form anfällt, vorwiegend amorph ist, eine Korngröße von 0,2 bis 1 mm und eine Schüttdichte von 0,40 bis 0,60 g/cm³ aufweist.

Figur 1 stellt dazu mittels Röntgenpulverdiffraktometrie (X-Ray Powder Diffraction; XRPD) ermittelten Röntgen-Pulverdiagramm des gemäß erfindungsgemäßem Verfahren erhältlichen, im wesentlichen amorphen Etidronat-Dinatriums dar.

Figur 2 stellt ein 12-Spektrum des gemäß dem erfindungsgemäßen Verfahren erhältlichen Etidronat-Dinatriums dar.

Eine bevorzugte Ausführungsform der vorliegenden Erfindung wird nachfolgenden beispielhaft beschrieben.

Grundsätzlich kann die organische Phase aus Ethanol, Methanol, Aceton und Isopropanol bestehen, wobei mit Isopropanol die günstigsten technologischen und stofflichen Parameter erreicht werden. Das erfindungsgemäße Verfahren wird daher im folgenden beispielhaft anhand von Isopropanol als organischer Phase beschrieben.

Zur Herstellung der flüssig-flüssig Dispersion wird eine wäßrige Lösung von Etidronat-Dinatrium einem Lösungsmittel aus einem Isopropanol/Wassergemisch zugegeben, es wird dabei ein Gesamtwassergehalt von 25 bis 35 Vol.-% und in der Suspension ein Feststoffgehalt von 10 bis 100 g/kg Dispersion eingestellt. Somit besteht diese flüssig-flüssig Dispersion aus einer wasserarmen Isopropanol-Phase und einer wasserreichen Salzphase. Zwischen beiden Phasen stellt sich ein bestimmtes Verteilungsgleichgewicht bezüglich Wasser und Natriumsalz ein. Entscheidend für den Fällungsprozeß ist, daß die organische Phase der dispersen wäßrigen Phase das Wasser entzieht, aber Salz nur in geringem Maße-aufnimmt. Die Kristallisation setzt dann nach etwa 7 bis 10 min. infolge hoher Übersättigung plötzlich ein. Dieser Kristallisation ist eine Agglomerierung der kristallisierenden Tröpfchen überlagert. Es bilden sich größere Partikel, die im Scherfeld des Rührers zerteilt werden und somit die gewünschte Komgrößenverteilung ergeben. Diese mechanische Zerkleinerung ist nur innerhalb weniger Minuten im Übergangsbereich vom noch flüssigen zum festen Zustand durch entsprechende Rührenergie möglich.
Etwas verzögert zur eben beschriebenen Grobkornfällung fällt in der organischen Phase in geringer Menge eine nadelförmige Feinkornfraktion aus. Durch ihre wesentlich geringere Sedimentationsgeschwindigkeit wird sie vor der fest-flüssig Trennung schnell und problemlos abklassiert und im Verfahren rezirkuliert. Die sandartige Grobkornfraktion wird anschließend filtriert und gewaschen. Durch Vakuumkontakttrocknung in bewegter Schüttung und bei allmählich bis auf ca. 85 bis 100 °C erhöhte Temperaturen wird bis zum wasserfreien Salz getrocknet.

Ein wesentliches Ergebnis der Anwendung des erfindungsgemäßen Verfahrens besteht darin, daß mit ihm ein pharmazeutisch verwertbares Etidronat-Dinatrium hergestellt werden kann. Die Vorteile der Lösung ergeben sich daraus, daß ein Verfahren entwickelt wurde,
- das die Erzeugung eines nahezu staubfreien Etidronat-Dinatriums aus einer flüssig-flüssig Dispersion mit einem Gesamtwassergehalt von 25 bis 35 Vol.-% und einem Gesamt-Etidronat-Dinatriumsalzgehalt von 10 bis 100 g/kg Dispersion ermöglicht, wobei das Etidronat-Dinatrium eine Korngröße im Bereich von 0,2 bis 1,0 mm, für die anschließende Tablettierung weitere günstige Feststoffeigenschaften, wie z. B. eine Schüttdichte von 0,4 - 0,6 g/cm³ besitzt, und in der Körnung des Etidronat-Dinatriums maximal 10 Gew.-% aller Teilchen > 1 mm und maximal 5 Gew.-% aller Teilchen < 0,1 mm sind. Die Etidronat-Dinatrium-Tablette besteht zum größten Teil aus Wirkstoff. Damit werden die Eigenschaften der Tablette in hohem Maße durch die Feststoffeigenschaften des Wirkstoffes bestimmt.
- das ein Etidronat-Dinatrium hervorbringt, weiches den pharmazeutischen Reinheitsanforderungen gemäß USP entspricht
- das ein Produkt bereitstellt, das seine sandartige Konsistenz im Trocknungsprozeß beibehält und problemlos zur wasserfreien Form getrocknet werden kann.

Dies ist besonders in der Trocknungsphase, der Kristallwasserfreisetzung, von entscheidender Bedeutung für eine homogen getrocknetes-Produkt. Außerdem wird der Trocknungsprozeß nicht durch die Abscheidung großer Mengen Feinstaub aus dem abgetrockneten Wasserdampf des Hydrates belastet.
Weiterhin bewirkt dieses Verfahren und das damit verbundene Verteilungsgleichgewicht im flüssig-flüssig Dispersionssystem, daß die Verunreinigung der HEDP (phosphorige Säure und Essigsäure) zu 95 % bzw. zu 99 % in der organischen Phase und nicht, wie erwartet, bevorzugt in der wäßrigen Phase aufgenommen werden. Somit werden diese Verunreinigungen nicht-mit im Endprodukt ausgefällt.

Die Erfindung wird anhand der folgenden, bevorzugten, nicht einschränkenden Beispiele erläutert.

### Meßverfahren:

### Röntgenpulverdiffraktometrie(X-Ray Powder Diffraction; XRPD):

Die Daten wurden mit einem Siemens Diffraktometer D5000 mit Cu-Anode (Auflösung von 0,01° zwischen 5° ≤ 2Θ ≤ 50°) ermittelt.

### Mikroskopie

Olympus BX51, mit Polarisation im Durchlicht

### Korngrößenanalyse:

Verwendet wurde ein Siebanalyse System RETSCH.
Laserbeugung System Helos Sympatec

### Riesel- und Fließeigenschaften

Messung des Fließneigungswinkels (Böschungswinkels) durch Vermessen des Kegels, der sich ergibt, wenn Pulver aus einem Trichter auf eine ebene Unterlage frei ausfließt

### Schüttdichtenmessung:

Die Schüttdichtenmessung erfolgte mittels Meßzylinder (ungerüttelt).

### Wassergehalt:

Gemessen wurde der Troekenverlust mit einem Feuchtebestimmungsgerät Mettler Toledo, 200°C, 20 min.

### Essigsäure

Der Essigsäuregehalt wurde gaschromatographisch (GC-Headspace, DB5, 30 m, FID) bestimmt.

### Isopropanol

Der Isopropanolgehalt wurde gaschromatographisch (GC-Headspace, DB-Wax, 30 m, FID) bestimmt.

### Phosphit

Der Phosphitgehalt wurde iodometrisch mittels Titration bestimmt.

### Beispiel 1

In einem Rührgefäß, ausgerüstet mit einem Turbinenrührer und zwei Strombrechem, werden 10,5 l auf -7°C vorgekühltes Isopropanol mit einem Wasseranteil von 25 Vol.-% vorgelegt. Unter Rühren werden 1,7 l einer wäßrigen Lösung des Natriumsalzes mit einer Konzentration von 350 g/l schnell zugegeben. Die Lösung enthält 0,6 Gew.-% phosphorige Säure und 0,6 Gew.-% Essigsäure. Nach etwa 3 bis 4 min. wird die Drehzahl auf 650 bis 700 U/min eingestellt und 10 min. bei dieser Geschwindigkeit gerührt. Danach verringert man die Drehzahl auf ca. 250 bis 300 U/min und läßt 10 min. nachrühren. Nach Abstellen der Rührung sedimentiert innerhalb von 3 min. die Grobkornfraktion. Die überstehende Feinkornsuspension wird abgezogen und das Grobkornsediment mit 7 l Isopropanol/Wassergemisch (25 Vol.-% Wasser oder klare Mutterlaugen aus vorangegangenen Fällungszyklen) durch kurzes Aufrühren nachgewaschen und die überstehende Suspension erneut abgezogen. Auf diese Weise trennt man die Feinkornfraktion nahezu vollständig ab. Der Feinkornanteil beträgt ca. 18 bis 19 % des Feststoffes. Die Grobkomfraktion wird filtriert und im Luftstrom angetrocknet.
Das feuchte Produkt wird in einem Rotationsverdampfer unter Vakuum getrocknet. Nachdem ein Vakuum von 2 kPa erreicht worden ist, wird die Heizbadtemperatur allmählich innerhalb von 3 h auf 80 °C erhöht. In dieser Phase wird unter einem Vakuum von 2 bis 3 kPa und aus ständig bewegter Schüttung im wesentlichen die freie Feuchte abgetrocknet. Der Brüden wird kondensiert. Anschließend erfolgt bei einem Vakuum unter 2 kPa, einer Heizbadtemperatur von 100 °C und in bewegter Schüttung innerhalb von 3 h die Dehydratisierung des Kristallwassers.
Es wird ein Endprodukt mit folgendem Korngrößenspektrum erhalten.

| | | |
|---|---|---|
| 0,1 | mm | 0,07 % |
| 0,1 - 0,2 | mm | 23,8% |
| 0,2 - 0,5 | mm | 27,3 % |
| 0,5 - 0,8 | mm | 46,2 % |
| 0,8 - 1,0 | mm | 2,16% |
| 1,0 | mm | 0,47% |

Die Schüttdichte beträgt 0,48 g/cm³.
Als weitere Qualitätsparameter wurden erreicht:

| | |
|---|---|
| Gehalt | 100 % |
| Trocknungsverluste | 3,5 % |
| Phosphite | 0,06 % |
| Isopropanol | 0,01 % |
| Essigsäure | 0,01 % |

Von der Feinkornsuspension wird durch Sedimentation und Abdestillieren die Mutterlauge abgetrennt und am Ende eine wäßrige Lösung erhalten, die zur Fällung erneut eingesetzt werden kann. Die klaren Mutterlaugen, Wasch- und Klassiergemische werden teilweise erneut zur Klassierung eingesetzt bzw. durch einfache Destillation in ein Isopropanol/Wassergemisch und einen wäßrigen Sumpf, der die Verunreinigungen der HEDP enthält, getrennt. Die Feststoffausbeute beträgt unter Berücksichtigung des Feinkornecyclings 97 % d. Th.

### Beispiel 2

Verfahren nach Beispiel 1 mit dem Unterschied, daß der Wassergehalt im eingesetzten Isopropanol 22 Vol.-% beträgt. Der abklassierte Feinkornanteil beträgt ca. 14 bis 15 % des Feststoffs. Es wird ein Endprodukt mit folgendem Korngrößenspektrum erhalten:

| | | |
|---|---|---|
| 0,1 | mm | 0,0 % |
| 0,1 - 0,2 | mm | 0,07% |
| 0,2 - 0,5 | mm | 19,7% |
| 0,5 - 0,8 | mm | 54,9 % |
| 0,8 - 1,0 | mm | 15,6 % |
| 1,0 | mm | 9,71% |

Die Schüttdichte beträgt 0,51 g/cm³.

### Beispiel 3

Verfahren nach Beispiel 1 mit dem Unterschied, daß eine Natriumsalzlösung mit 3 Gew.-% phosphoriger Säure verwendet wird.
Es wird ein Endprodukt mit folgender Qualität erreicht:

| | |
|---|---|
| Gehalt | 100 % |
| Trocknungsverlust | 3,5 % |
| Phosphite | 0,61 % |
| Isopropanol | 0,01 % |
| Essigsäure | 0,01 % |

## Patentansprüche

1. Verfahren zur Isolierung von Etidronat-Dinatrium, **dadurch gekennzeichnet, daß**
a) eine flüssig-flüssig Dispersion, bestehend aus
- einer wäßrig-organischen und
- einer wäßrigen, das Etidronat-Dinatriumsalz enthaltenden Phase auf eine Temperatur von 0 °C bis 30 °C eingestellt und intensiv gerührt wird,
b) anschließend eine Grobkomfraktion aus der flüssig-flüssig Dispersion ausgefällt wird,
c) in einem zweiten, v erzögerten S chritt e ine F einkomfraktion a us d er o rganischen Phase ausgefällt wird.

2. Verfahren gemäß Anspruch 1, **dadurch gekennzeichnet, daß** die flüssig-flüssig Dispersion einen Gesamtwassergehalt von 25 bis 35 Vol.-% aufweist.

3. Verfahren gemäß Anspruch 1 oder 2, **dadurch gekennzeichnet, daß** die flüssig-flüssig Dispersion einen Gesamt-Etidronat-Dinatriumsalzgehalt von 10 bis 100 g/kg Dispersion aufweist.

4. Verfahren gemäß einem der Ansprüche 1 bis 3, **dadurch gekennzeichnet, daß**
d) die Feinkornfraktion durch Klassierung von der Grobkomfraktion getrennt und in das Verfahren zurückgeführt wird.

5. Verfahren gemäß Anspruch 4, **dadurch gekennzeichnet, daß**
e) die Grobkomfraktion nach Schritt d) filtriert und mittels Trocknung in bewegter Schüttung bis zu einer Endtemperatur von 85 °C bis 100 °C getrocknet wird.

6. Verfahren gemäß einem der Ansprüche 1 bis 5, **dadurch gekennzeichnet, daß** die flüssig-flüssig Dispersion vorzugsweise zwischen 5 °C und 10 °C eingestellt wird.

7. Verfahren gemäß einem der Ansprüche 1 bis 6, **dadurch gekennzeichnet, daß** die wäßrig-organische Phase eine Isopropanol/Wasser-Phase ist.

8. Verfahren gemäß einem der Ansprüche 1 bis 7, **dadurch gekennzeichnet, daß** für die flüssig-flüssig Dispersion eine wäßrige Lösung von Etidronat-Dinatrium einem Lösungsmittel aus Isopropanol/Wasser zugegeben wird.

9. Etidronat-Dinatrium erhältlich nach einem Verfahren der Ansprüche 1 bis 8 mit einer vorwiegend amorphen Festkörperform.

10. Etidronat-Dinatrium erhältlich nach einem Verfahren der Ansprüche 1 bis 8 mit einer Korngröße von 0,2 - 1 mm.

11. Etidronat-Dinatrium erhältlich nach einem Verfahren der Ansprüche 1 bis 8 mit einer Schüttdichte von 0,4 - 0,6 g/cm³.

## Claims

1. A method for isolating etidronate disodium, **characterized in that**
a) a liquid-liquid dispersion, consisting of
- an aqueous-organic and
- an aqueous phase comprising the etidronate disodium salt is adjusted to a temperature of 0°C to 30°C and intensively stirred,
b) then a coarse grain fraction is precipitated from the liquid-liquid dispersion,
c) in a second, delayed step a fine grain fraction is precipitated from the organic phase.

2. The method as claimed in claim 1, **characterized in that** the liquid-liquid dispersion has a total water content of 25 to 35% by volume.

3. The method as claimed in claim 1 or 2, **characterized in that** the liquid-liquid dispersion has a total etidronate disodium salt content of 10 to 100 g/kg of dispersion.

4. The method as claimed in one of claims 1 to 3, **characterized in that**
d) the fine grain fraction is separated from the coarse grain fraction by classification and fed back into the method.

5. The method as claimed in claim 4, **characterized in that**
e) the coarse grain fraction according to step d) is filtered and dried by means of drying in a moving bed up to a final temperature of 85°C to 100°C.

6. The method as claimed in one of claims 1 to 5, **characterized in that** the liquid-liquid dispersion is preferably adjusted to between 5°C and 10°C.

7. The method as claimed in one of claims 1 to 6, **characterized in that** the aqueous-organic phase is an isopropanol/water phase.

8. The method as claimed in one of claims 1 to 7, **characterized in that**, for the liquid-liquid dispersion, an aqueous solution of etidronate disodium is added to a solvent consisting of isopropanol/water.

9. Etidronate disodium obtainable by a method as claimed in one of claims 1 to 8, having a mainly amorphous solid form.

10. Etidronate disodium, obtainable by a method as claimed in claims 1 to 8, having a particle size of 0.2 - 1 mm.

11. Etidronate disodium, obtainable by a method as claimed in claims 1 to 8, having a bulk density of 0.4 - 0.6 g/cm³.

## Revendications

1. Procédé pour l'isolement d'étidronate disodique, **caractérisé en ce que**
a) on ajuste à une température de 0°C à 30°C et agite énergiquement une dispersion liquide-liquide constituée de
- une phase aqueuse-organique et
- une phase aqueuse contenant du sel disodique d'étidronate,
b) on fait ensuite précipiter une fraction à gros grains à partir de la dispersion liquide-liquide,
c) dans une seconde étape retardée, on fait précipiter une fraction à grains fins à partir de la phase organique.

2. Procédé selon la revendication 1, **caractérisé en ce que** la dispersion liquide-liquide présente une teneur totale en eau de 25 à 35 % en volume.

3. Procédé selon la revendication 1 ou 2, **caractérisé en ce que** la dispersion liquide-liquide présente une teneur totale en sel disodique d'étidronate de 10 à 100 g/kg de dispersion.

4. Procédé selon l'une quelconque des revendications 1 à 3, **caractérisé en ce que**
d) la fraction à grains fins est séparée par classification de la fraction à gros grains et est recyclée dans le processus.

5. Procédé selon la revendication 4, **caractérisé en ce que**
e) la fraction à gros grains est séparée par filtration après l'étape d) et séchée par séchage en lit mobile, jusqu'à une température de 85°C à 100°C.

6. Procédé selon l'une quelconque des revendications 1 à 5, **caractérisé en ce que** la dispersion liquide-liquide est ajustée de préférence entre 5°C et 10°C.

7. Procédé selon l'une quelconque des revendications 1 à 6, **caractérisé en ce que** la phase aqueuse-organique est une phase d'isopropanol/eau.

8. Procédé selon l'une quelconque des revendications 1 à 7, **caractérisé en ce que**, pour la dispersion liquide-liquide, on ajoute une solution aqueuse d'étidronate disodique à un solvant constitué d'isopropanol/eau.

9. Etidronate disodique pouvant être obtenu selon un procédé des revendications 1 à 8, ayant une forme de solide essentiellement amorphe.

10. Etidronate disodique pouvant être obtenu selon un procédé des revendications 1 à 8, ayant une taille de grain de 0,2 - 1 mm.

11. Etidronate disodique pouvant être obtenu selon un procédé des revendications 1 à 8, ayant une densité apparente de 0,4 - 0,6 g/cm³.
